# EUROPEAN PATENT APPLICATION

(11) **EP 2 770 340 A1**
(43) Date of publication of application: **27.08.2014**
(21) Application number: 13000871.7
(22) Date of filing: 21.02.2013
(51) Int. Cl.: G01S 19/05, G01S 19/38, G01S 19/32

(54) **Positioning by using encrypted GNSS navigation signals**

(71) Applicant: Astrium GmbH, 82024 Taufkirchen (DE)
(72) Inventor: Wendel, Jan, 81373 München (DE); Kogler, Wolfgang, 85521 Ottobrunn (DE)

(57) **Abstract**

The invention relates to a system for positioning by using encrypted GNSS navigation signals comprising a base station (10) being configured to receive encrypted GNSS navigation signals of an encrypted GNSS service with a directive antenna (14), to perform a blind demodulation of the received encrypted GNSS navigation signals in order to generate ranging code chips, to receive navigation messages of open GNSS navigation signals from the GNSS satellites broadcasting the encrypted GNSS navigation signals received via the directive antenna (14), to calculate the times of transmission of the encrypted GNSS navigation signals from the respective GNSS satellites, and to provide via a communication link (20) the generated ranging code chips of the encrypted GNSS navigation signals and the calculated times of transmission of the encrypted GNSS navigation signals for positioning by a GNSS receiver (24).

## Description

### TECHNICAL FIELD

The invention relates to positioning by using encrypted GNSS navigation signals.

### BACKGROUND

In Global Navigation Satellite Systems (GNSS), usually different services are available for different user groups. For example, the Navstar GPS system offers - among other signals - an open navigation or ranging signal on L1 referred to as GPS-SPS, and a navigation or ranging signal on L2 for military users referred to as GPS-PPS.

In order to restrict the access to GPS-PPS, the PRN codes used for ranging are encrypted with another code which is not known to the public. The resulting encrypted navigation signal is called P(Y). This encryption prevents that a non-authorized user can generate suitable replicas for correlation with the received encrypted signal in order to obtain range measurements.

For Galileo, the Public Regulated Service (PRS) uses encryption of the ranging code and data, so a tracking and positioning using PRS signals is restricted to authorized users which have appropriate keys, means for decryption, and means for the generation of ranging code replicas.

For both Galileo and GPS, it is possible e.g. in times of crisis to jam the open navigation signals within a certain region, while the encrypted navigation signals of GPS-PPS and Galileo PRS services are still available to the authorized users.

### SUMMARY OF INVENTION

It is an object of the invention to provide positioning by using encrypted GNSS navigation or ranging signals.

This object is achieved by the subject matter of the independent claims. Further embodiments are shown by the dependent claims.

This invention proposes a method for positioning using encrypted signals like GPS-PPS or Galileo PRS, without requiring appropriate keys, or any means for decryption. In other words, the invention allows non-authorized users to exploit GPS-PPS and Galileo PRS for positioning. The invention proposes to receive encrypted GNSS navigation signals with a directive antenna at a known position and to perform a blind demodulation of the received encrypted GNSS navigation signals in order to generate and provide ranging code chips of a GNSS satellite in view. Furthermore, the times of transmission of the encrypted GNSS navigation signals from the respective GNSS satellites are calculated for example from the known position of the base station and the known GNSS satellite orbits, which can be obtained from open GNSS navigation signals of the satellites broadcasting the encrypted GNSS navigation signals. This information, the generated ranging code chips of the encrypted GNSS navigation signals, the calculated times of transmission of the encrypted GNSS navigation signals and the GNSS satellite orbits can be provided so that a GNSS receiver receiving these information can determine its position with the encrypted GNSS navigation signals.

An embodiment of the invention relates to system for positioning by using encrypted GNSS navigation signals comprising a base station being configured to receive encrypted GNSS navigation signals of an encrypted GNSS service with a directive antenna, to perform a blind demodulation of the received encrypted GNSS navigation signals in order to generate ranging code chips, to receive navigation messages of open GNSS navigation signals from the GNSS satellites broadcasting the encrypted GNSS navigation signals received via the directive antenna or another, to calculate the times of transmission of the encrypted GNSS navigation signals from the respective GNSS satellites, and to provide via a communication link the generated ranging code chips of the encrypted GNSS navigation signals, the information contained in the navigation messages of the open GNSS navigation signals, and the calculated times of transmission of the encrypted GNSS navigation signals for positioning by a GNSS receiver with the encrypted GNSS navigation signals.

The directive antenna can be implemented by means of either an antenna with several antenna elements and signal processing means for obtaining a directivity to the GNSS satellites broadcasting the encrypted GNSS navigation signals, or an antenna with a small opening angle and antenna control means being adapted to steer the antenna reception to each of the GNSS satellites broadcasting the encrypted GNSS navigation signals.

The base station can be adapted to receive encrypted GNSS navigation signals from at least four different GNSS satellites.

The communication link for providing the generated ranging code chips of the encrypted GNSS navigation signals and the calculated times of transmission of the encrypted GNSS navigation signals to one or more GNSS receivers can be secured by an encryption, so that only receivers being adapted to decrypt the encrypted communication link can receive ranging code chips via the communication link.

The encrypted GNSS service may be a GNSS service with secured navigation signals and/or services, which uses message and/or ranging code encryption. The GNSS can be Galileo and the encrypted GNSS service can be the Galileo Public Regulated Service. However, the system can be applied in principle to any secured navigation signals and services which use message and / or ranging code encryption.

A further embodiment of the invention relates to a base station for use with a system of the invention and as described herein, comprising blind demodulation means for generating ranging code chips from encrypted GNSS navigation signals received via a directive antenna, calculation means for calculating the times of transmission of the encrypted GNSS navigation signals by means of the known position of the base station and the known orbits of the GNSS satellites broadcasting the encrypted GNSS navigation signals, and communication means for providing the generated ranging code chips and calculated times of transmission of the encrypted GNSS navigation signals and the GNSS satellite orbits via a communication link. The base station can be for example implemented by a industry standard server executing a program implementing the blind demodulation means, the calculation means and the communication means being adapted to establish a communication link to receivers of the encrypted GNSS service, for example via the internet or a mobile communication link. The base station can broadcast the ranging code chips so that the amount of data transmitted by the base station is independent from the number of receivers.

The base station may further comprise receiver means for receiving open GNSS navigation signals and for obtaining navigation messages from the received open GNSS navigation signals and for providing the navigation messages via the communication link.

The base station may be coupled to a directive antenna, which is adapted for receiving encrypted GNSS navigation signals broadcasted by GNSS satellites with a signal-to-noise ratio sufficient for blind demodulation.

Another embodiment of the invention relates to a GNSS receiver for positioning by using encrypted GNSS navigation signals with a system of the invention and as described herein comprising a replica generation unit for generating replicas from ranging code chips provided by and received via a communication link from a base station of the invention and as described herein, wherein the replicas are suited for correlation with a received encrypted GNSS service signal, a correlation unit for correlating the received encrypted GNSS service signal with the generated replicas, and a calculation unit for calculating a position, a velocity and/or a time from the correlation results. The receiver may be for example implemented as an integrated circuit, for example as dedicated chip, ASIC (Application Specific Integrated Circuit), or (F)PGA ((Field) Programable Gate Array).

The GNSS receiver may be further adapted to decrypt the ranging code chips provided via an encrypted communication link from a base station of the invention and as described herein. Thus, the GNSS receiver is able to also use encrypted ranging code chips. In contrast to a GNSS receiver fully equipped with a security module to be able to use an encrypted GNSS service, this GNSS receiver approach requires less complex decryption means. Such a GNSS receiver can therefore be implemented with reduced technical efforts and at lower costs.

The GNSS receiver may be further adapted to gain access to ranging code chips provided by a system of the invention and as described herein. For example, the GNSS receiver may be equipped with authentication and identification capabilities to gain access to the communication link and the ranging code chips transmitted of this link.

A yet further embodiment of the invention relates to a method for receiving ranging code chips of an encrypted GNSS service provided by a system of the invention and as described herein and generating replicas from received ranging code chips, wherein the replicas are suited for correlation with a received encrypted GNSS service signal, and providing the generated replicas for correlating the received encrypted GNSS service signal with the provided replicas.

A further embodiment of the invention relates to a computer program, which implements the method according to the invention and as described herein and enabling the usage of ranging code chips provided according to the invention when executed by a computer. Such a computer program could be used by a computer equipped with a GNSS receiver, for example a smartphone or portable navigation computer, enabling the computer to not only process standard GNSS navigation signals, but also encrypted GNSS service signals.

According to a further embodiment of the invention, a record carrier storing a computer program according to the invention may be provided, for example a CD-ROM, a DVD, a memory card, a diskette, or a similar data carrier suitable to store the computer program for electronic access.

These and other aspects of the invention will be apparent from and elucidated with reference to the embodiments described hereinafter.

The invention will be described in more detail hereinafter with reference to exemplary embodiments. However, the invention is not limited to these exemplary embodiments.

### BRIEF DESCRIPTION OF DRAWINGS

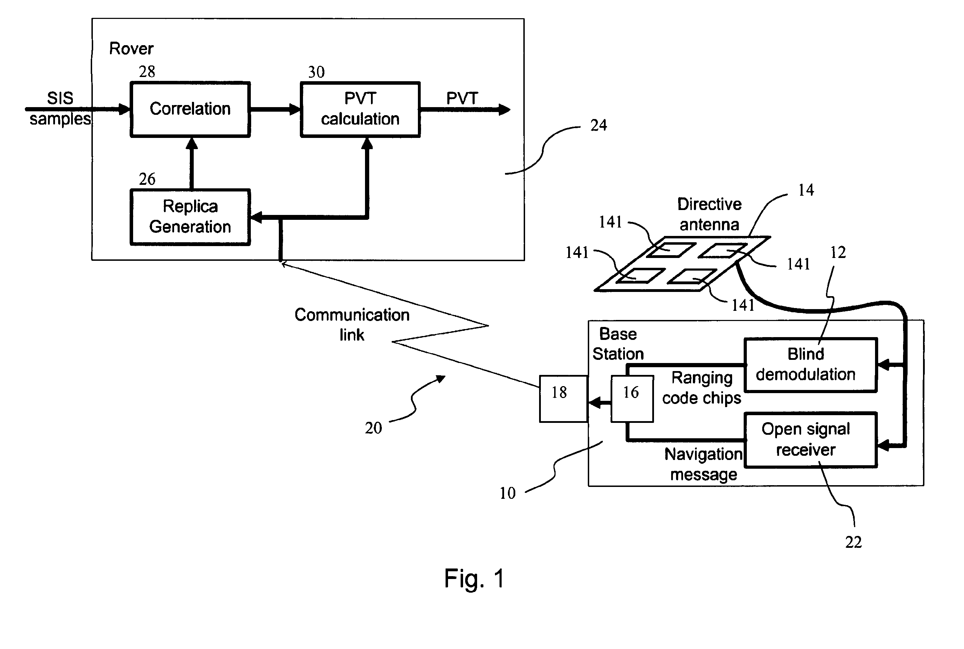

- Fig. 1: shows an embodiment of a block diagram of system for exploiting encrypted ranging signals of a GNSS according to the invention.

### DESCRIPTION OF EMBODIMENTS

In the following, functionally similar or identical elements may have the same reference numerals. Furthermore, the following embodiment of the invention is described for the case of Galileo PRS, but it should be noted that the invention can be applied to any secured navigation signals and services which use message and / or ranging code encryption.

Fig. 1 shows a system for exploiting encrypted ranging signals of a GNSS, which comprises a base station 10 at a known position, and a GNSS receiver 24 implemented in a rover at an unknown position for which a position fix shall be obtained. It is assumed that rover 24 and base station 10 have at least four satellites in common view.

At the base station 10, a directive antenna 14 with several antenna elements 141 is connected to a device 12 which performs a blind demodulation of the encrypted signal transmitted by every satellite in view, thereby providing ranging code chips. The antenna 14 needs to be directive in order to achieve a signal-to-noise ratio which allows for blind demodulation. The directivity can be achieved in different ways, either an antenna 14 with several antenna elements 141 as shown in Fig. 1 can be used and the directivity is obtained by signal processing techniques, and/or an antenna with a small opening angle is used that can be pointed to each satellite.

With the base station 10 at a known position and known satellite orbits, which are obtained by decoding the navigation messages of an open GNSS signal of the respective constellation, the time of flight of the satellite signals can be calculated with calculation means 16. This allows determining for each satellite in view of the base station 10 the precise point in time where each ranging code chip was transmitted. Furthermore, the knowledge of base station position and satellite orbits allows to precisely steer the antenna reception to each satellite.

In case that an antenna 14 with several antenna elements 141 is used, the ranging code chips can be determined for all satellites in view from one measurement of a sufficiently high number of baseband or IQ data samples for each antenna element 141. In case that an antenna has to be pointed sequentially from one satellite to the next, the time intervals for which ranging code chips are available are different for each satellite and do not overlap. However, if the rover 24 is either static or information is available on the relative movement of the rover, this can be accounted for in the calculation of the rover's position.

At the base station 10, there can be also a receiver 22 available, either connected to the directive antenna 14 or any other suitable antenna, which tracks an open signal of the respective GNSS - e.g. the SPS L1 CA-code signal for GPS, or E1 OS for Galileo - in order to obtain the navigation messages, i.e. Almanach, Ephemeris, satellite clock corrections, relativistic corrections, etc.

Given that this information can be obtained by other means, for example via a communication link with a server like an internet server providing this information, this receiver is not required.

Furthermore, within its time of validity, information that has been obtained earlier can be used, too, so that a missing open service at the base station 10 can also be tolerated for some time. However, due to the spatial separation of rover 24 and base station 10, it is also likely that a regional jamming of the open service e.g. affects the rover 24 only, but not the base station 10.

For each satellite, the ranging code chips and the information on their times of transmission at the respective satellite are transferred to the rover 24 using a suitable communication link 20 from the base station 10. The communication link 20 is established by communication means 18 of the base station 10. The information contained in the navigation messages are transferred to the rover via the communication link 20 or any other link, too.

In order to obtain one position fix, it is sufficient to provide ranging code chips for a short period of time only, which can be between some milliseconds and a few seconds. Therefore, it is not necessary that continuously all ranging code chips are provided to the rover 24, which could be very demanding for the communication link 20.

Furthermore, it is possible that several receivers 24 listen to the broadcast of one base station 10, so the load on the communication network does not necessarily increase with the number of rovers 24.

In order to be able to calculate a position fix, the rover 24 needs to know in advance the period of time for which the base station 10 is going to provide ranging code chips. This can be achieved by an appropriate scheduling of the measurements made at the base station 10. The rover acquires baseband or IF (Intermediate Frequency) samples for a time interval which overlaps with the time interval or intervals, for which the base station 10 will provide the ranging code chips. As soon as the ranging code chips are available at the rover 24 via the communication link 20, the rover 24 is able to generate replicas for correlation with the IF or baseband samples, which then allows calculating the time of flight of each satellite signal to the rover 24. From these pseudorange measurements and the navigation message information, the rover 24 is able to derive a position fix. It has to be noted that this method can be extended to Doppler measurements, too.

With this invention, it is possible to use encrypted ranging signals for positioning, which are usually usable for authorized users only.

### REFERENCE NUMERALS

- 10: base station
- 12: blind demodulation means
- 14: directive antenna
- 141: antenna elements
- 16: calculation means
- 18: communication means
- 20: communication link
- 22: receiver means
- 24: GNSS receiver/rover
- 26: replica generation unit
- 28: correlation unit
- 30: calculation unit

## Claims

1. A system for positioning by using encrypted GNSS navigation signals comprising a base station (10) being configured to receive encrypted GNSS navigation signals of an encrypted GNSS service with a directive antenna (14), to perform a blind demodulation of the received encrypted GNSS navigation signals in order to generate ranging code chips, to receive navigation messages of open GNSS navigation signals from the GNSS satellites broadcasting the encrypted GNSS navigation signals received via the directive antenna (14) or another antenna, to calculate the times of transmission of the encrypted GNSS navigation signals from the respective GNSS satellites, and to provide via a communication link (20) the generated ranging code chips of the encrypted GNSS navigation signals, the information contained in the navigation messages of the open GNSS navigation signals, and the calculated times of transmission of the encrypted GNSS navigation signals for positioning by a GNSS receiver (24) with the encrypted GNSS navigation signals.

2. The system of claim 1, wherein the directive antenna (14) is implemented by means of either
- an antenna with several antenna elements (141) and signal processing means for obtaining a directivity to the GNSS satellites broadcasting the encrypted GNSS navigation signals, or
- an antenna with a small opening angle and antenna control means being adapted to steer the antenna reception to each of the GNSS satellites broadcasting the encrypted GNSS navigation signals.

3. The system of claim 1 or 3, wherein the base station (10) is adapted to receive encrypted GNSS navigation signals from at least four different GNSS satellites.

4. The system of claim 1, 2 or 3, wherein the communication link (20) for providing the generated ranging code chips of the encrypted GNSS navigation signals and the calculated times of transmission of the encrypted GNSS navigation signals to one or more GNSS receivers (24) is secured by an encryption.

5. The system of any of the preceding claims, wherein the encrypted GNSS service is a GNSS service with secured navigation signals and/or services, which uses message and/or ranging code encryption.

6. The system of any of the preceding claims, wherein the GNSS is Galileo and the encrypted GNSS service is the Galileo Public Regulated Service.

7. A base station (10) for use with a system of any of the preceding claims, comprising
- blind demodulation means (12) for generating ranging code chips from encrypted GNSS navigation signals received via a directive antenna (14),
- calculation means (16) for calculating the times of transmission of the encrypted GNSS navigation signals by means of the known position of the base station and the known orbits of the GNSS satellites broadcasting the encrypted GNSS navigation signals, and
- communication means (18) for providing the generated ranging code chips and calculated times of transmission of the encrypted GNSS navigation signals and the GNSS satellite orbits via a communication link (20).

8. The base station of claim 7, further comprising receiver means (22) for receiving open GNSS navigation signals and for obtaining navigation messages from the received open GNSS navigation signals and for providing the navigation messages via the communication link (20).

9. The base station of claim 7 or 8, being coupled to a directive antenna (12), which is adapted for receiving encrypted GNSS navigation signals broadcasted by GNSS satellites with a signal-to-noise ratio sufficient for blind demodulation.

10. A GNSS receiver for positioning by using encrypted GNSS navigation signals with a system of any of the claims 1 to 6 comprising
- a replica generation unit (22) for generating replicas from ranging code chips provided by and received via a communication link (20) from a base station (10) of any of claims 7 to 9, wherein the replicas are suited for correlation with a received encrypted GNSS service signal,
- a correlation unit (28) for correlating the received encrypted GNSS service signal with the generated replicas, and
- a calculation unit (30) for calculating a position, a velocity and/or a time from the correlation results.

11. The GNSS receiver of claim 10, being further adapted to decrypt the ranging code chips provided via an encrypted communication link from a base station of any of the claims 4 to 6.

12. The GNSS receiver of claim 10 or 11, being further adapted to gain access to ranging code chips provided by a system of claim 4.

13. A method for receiving ranging code chips of an encrypted GNSS service provided by a system of any of the claims 1 to 6 and generating replicas from received ranging code chips, wherein the replicas are suited for correlation with a received encrypted GNSS service signal, and providing the generated replicas for correlating the received encrypted GNSS service signal with the provided replicas.

14. A computer program implementing a method of any of claim 13.

15. A record carrier storing a computer program according to claim 14.
